(19) Europäisches Patentamt
European Patent Office
Office européen des brevets

(11) **EP 2 073 352 B1**

(12) **EUROPÄISCHE PATENTSCHRIFT**

(45) Veröffentlichungstag und Bekanntmachung des Hinweises auf die Patenterteilung:
**16.03.2016   Patentblatt 2016/11**

(51) Int Cl.:
***H02K 1/27*** *(2006.01)*      *H02K 29/03* *(2006.01)*

(21) Anmeldenummer: **07024405.8**

(22) Anmeldetag: **17.12.2007**

(54) **Permanenterregte Synchronmaschine mit Schalenmagneten**

Permanently excited synchronous machine with shell magnets

Machine synchrone à excitation permanente dotée d'aimants à coque

(84) Benannte Vertragsstaaten:
**DE**

(43) Veröffentlichungstag der Anmeldung:
**24.06.2009   Patentblatt 2009/26**

(73) Patentinhaber: **Siemens Aktiengesellschaft
80333 München (DE)**

(72) Erfinder: **Vollmer, Rolf
36129 Gersfeld (DE)**

(56) Entgegenhaltungen:
**EP-A- 0 445 308      DE-U1- 9 216 117
JP-A- 2003 230 240**

**Beschreibung**

Die Erfindung betrifft eine permanenterregte Synchronmaschine mit einem mit Nuten versehenen Stator und mit einem Rotor, der Permanentmagnete aufweist, die magnetische Pole bilden, wobei die Permanentmagnete als Schalenmagnete ausgeführt sind.

Derartige permanenterregte Synchronmaschinen weisen im Betrieb oftmals Drehmomentwelligkeiten auf, die aus dem Zusammenspiel der Nutung und der Polausbildung meist unerwünschte Oberwellen zur Folge haben, die als Nutrastmomente (Reluktanzmomente) auftreten und durch das Erregerfeld hervorgerufene Oberwellen in der induzierten Spannung verursachen.

Zur Reduzierung dieser Phänomene sind verschiedene konstruktive Unterdrückungsmittel bei dynamoelektrischen Maschinen bekannt.

So wird beispielsweise in der DE 100 41 329 A1 beschrieben, dass eine Polbedeckung von 70 bis 80% der Oberfläche des Läufers mit Permanentmagneten zu einem verbesserten Oberwellenverhalten führt.

Der DE 199 61 760 A1 ist zu entnehmen, dass spezielle Wicklungsfaktoren eines in den Nuten angeordneten Wicklungssystems und eine Schrägung der Nuten zu einer Reduzierung der Drehwelligkeit führen.

Aus der DE 10 2004 045 939 A1 ist eine permanenterregte Synchronmaschine bekannt, die mehrere Unterdrückungsmittel aufweist. Dabei wird sowohl der Permanentmagnet mit nur einer Teilpolbedeckung ausgeführt als auch eine Staffelung der Permanentmagnete eines Pols durchgeführt oder die Schrägung der Nuten vorgeschlagen. Des Weiteren wird als weiteres Unterdrückungsmittel eine zusätzliche Staffelung der Permanentmagnete eines magnetischen Pols oder einer zweiten Schrägung der Permanentmagnete oder eine zweite Schrägung der Nuten vorgeschlagen.

**Aus der** JP 2003 230240 A **ist eine permanenterregte Synchronmaschine bekannt mit einem mit Nuten versehenen Stator und mit einem Rotor der Permanentmagnete aufweist, die magnetische Pole bilden, wobei die Permanentmagnete als Schalenmagnete mit zwei gekrümmten Oberflächen ausgeführt sind, die jeweils einen vorgebbaren Teil eines magnetischen Pols bedecken.**

**Aus der** EP 0 445 308 A1 **ist ein permanenterregter Synchronmotor bekannt, dessen Rotor eine gekrümmte Oberfläche aufweist, auf der schalenartige Permanentmagnete angeordnet sind, derart, dass der Luftspalt der permanenterregten Synchronmaschine in der Polmitte geringer ist als an den Polenden.**

Nachteilig bei diesen Ausführungsformen sind jeweils der erhöhte Montagebedarf und die damit verbundenen teueren Herstellungskosten der permanenterregten Synchronmaschine.

Ausgehend davon liegt der Erfindung die Aufgabe zugrunde, eine permanenterregte Synchronmaschine zu schaffen, bei der die Oberwellen des magnetischen Luftspaltfeldes reduziert werden und damit die Drehmomentwelligkeit unterdrückt wird. Des Weiteren sollen die Wirbelstrom- und Hystereseverluste im Eisen des Stators der permanenterregten Synchronmaschine reduziert werden.

Die Lösung der gestellten Aufgabe gelingt durch eine permanenterregte Synchronmaschine mit den Merkmalen des Anspruchs 1.

Mit den vorgestellten Maßnahmen, wird nunmehr die Drehmomentwelligkeit einer permanenterregten Synchronmaschine maßgeblich reduziert.

Für die Ausbildung der störenden Drehmomentwelligkeit sind im mehrere Aspekte verantwortlich.

Zum einen verursachen Reluktanzkräfte zwischen den Permanentmagneten und den Zähnen ein Nutrasten mit einer Rastpolpaarzahl. Die weiteren Hauptursachen für die Drehmomentwelligkeit liegen in den Wechselwirkungen von Rotor- und Statormagnetfeldwellen im Luftspalt der dynamoelektrischen Maschine begründet. Als besonders störend sind dabei die fünfte und die siebte Oberwelle der Nutzwelle des sich im Luftspalt ausbildenden magnetischen Luftspaltfeldes einzuordnen.

Dabei ist die Nutzwelle, die Komponente des Luftspaltfeldes, die für die Drehmomentbildung maßgebend ist. Die Oberwellen verursachen neben der Verformung des angestrebten sinusförmigen Luftspaltfeldes auch eine parasitäre Drehmomentbildung, die ggf. sogar dem eigentlichen Drehmoment entgegenwirkt.

Durch die erfindungsgemäßen Maßnahmen werden nunmehr diese angesprochenen Ursachen der Drehmomentwelligkeit weiter reduziert ohne den Stator und/oder den Rotor durch Schrägung der Nuten bzw. Permanentmagnete oder deren Staffelung zusätzlich modifizieren zu müssen.

Erfindungsgemäß ist der Innenradius der Schalenmagnete gleich dem Außenradius. Dies führt zu einer weiteren Reduzierung der Oberwellen des magnetischen Luftspaltfeldes der permanenterregten Synchronmaschine und damit der Drehmomentwelligkeit, da sich ein von der Polmitte zu den Polrändern wachsender Luftspalt ergibt, so dass weniger Feldlinien des Permanentmagneten den Zahn des Stators, insbesondere den Zahnkopf und somit letztendlich das Eisen durchsetzen. Damit reduzieren sich insbesondere bei hohen Drehzahlen der permanenterregten Synchronmaschine die Eisen- und Hystereseverluste.

Insbesondere stellt sich von der Mitte eines jeden Permanentmagneten zu den Rändern des jeweiligen Permanentmagneten ein wachsender Luftspalt ein. Der Verlauf ist stetig, d.h. es liegen keine Sprünge an der dem Luftspalt der dynamoelektrischen Maschine zugewandten Oberfläche des Permanentmagneten vor.

Insbesondere durch die im Wesentlichen senkrecht zur der äußeren Oberfläche gerichtete quasiradiale magnetische Vorzugsrichtung der Permanentmagnete als Oberflächenmagnete oder auch als vergrabene Magnete, und/oder vor allem in Verbindung mit der geometrischen Ausgestaltung der Schalenmagnete im Verhältnis zur Statorbohrung, stellt sich eine erhebliche Reduzierung der Drehmomentwelligkeit ein. Dies führt außerdem zu einer Reduzierung der Wirbel- und Hystereseverluste im Eisen des Stators.

Die radiale oder zumindest quasiradiale magnetische Vorzugsrichtung der Permanentmagnete äußert sich vor allem im magnetischen Verlauf der Feldlinien der Permanentmagnete im Luftspalt der dynamoelektrischen Maschine. Die Feldlinien verlaufen nicht parallel, sondern verlaufen auseinander - divergieren also.

In einer weiteren Ausgestaltung ist der Teilpolbedeckungsbereich der Permanentmagnete, insbesondere der Schalenmagnete im Bereich des jeweiligen magnetischen Pols im Bereich zwischen 0,9 mal $\alpha\tau_p$ und 0,5 mal $\alpha\tau_p$ zu wählen, also zwischen dem 0,9 und 0,5 fachen eines magnetischen Pols.

Die erfindungsgemäßen Maßnahmen sind äußerst vorteilhaft, da die Schalenmagnete auf dem Rotor lediglich axial hintereinander anzuordnen sind, ohne eine Schrägung durchführen zu müssen. Diese Schrägung durchzuführen muss erfahrungsgemäß sehr positionsgenau und exakt erfolgen, um andere parasitären Effekte, wie z.B. Oberwellen des Luftspaltfeldes, nicht zu verstärken und damit letztlich die Drehmomentwelligkeit zu erhöhen.

Grundsätzlich weist ein magnetischer Pol des Rotors zumindest einen Schalenmagneten auf. Es ist aber durchaus möglich mehrere Schalenmagnete axial hintereinander anzuordnen, um beispielsweise die axiale Länge eines Rotors mit Schalenmagneten gleicher Polarisation zu bestücken. Ergänzend oder separat ausführbar, ist es auch möglich den Schalenmagneten eines magnetischen Pols in Umfangsrichtung aus mehreren Teilschalenmagnete aufzubauen, so dass die Teilschalenmagnete zusammen einen Teilpolbedeckungsfaktor des oben genannten Intervalls aufweisen. Insbesondere die Teilschalenmagnete sind dabei innerhalb ihres Pols nahezu lückenlos aneinanderzusetzen.

Die Teilschalenmagnete eines magnetischen Pols sind aufgrund des gleichen Radius der von äußerer und innerer Oberfläche des gesamten Schalenmagnets eines magnetischen Pols nicht identisch, also unterschiedlich, insbesondere bzgl. ihrer radialen Dicke.

Die Erfindung sowie weitere vorteilhafte Ausgestaltungen der Erfindung gemäß den Merkmalen der abhängigen Ansprüche sind den prinzipiell dargestellten Zeichnungen zu entnehmen. Darin zeigen:

FIG 1 einen Querschnitt einer permanenterregten Synchronmaschine,
FIG 2 einen Detailausschnitt dieses Querschnitts,
FIG 3 einen magnetischen Pol mit Schalenmagnet,
FIG 4 die geometrische Ausgestaltung eines Schalenmagneten.

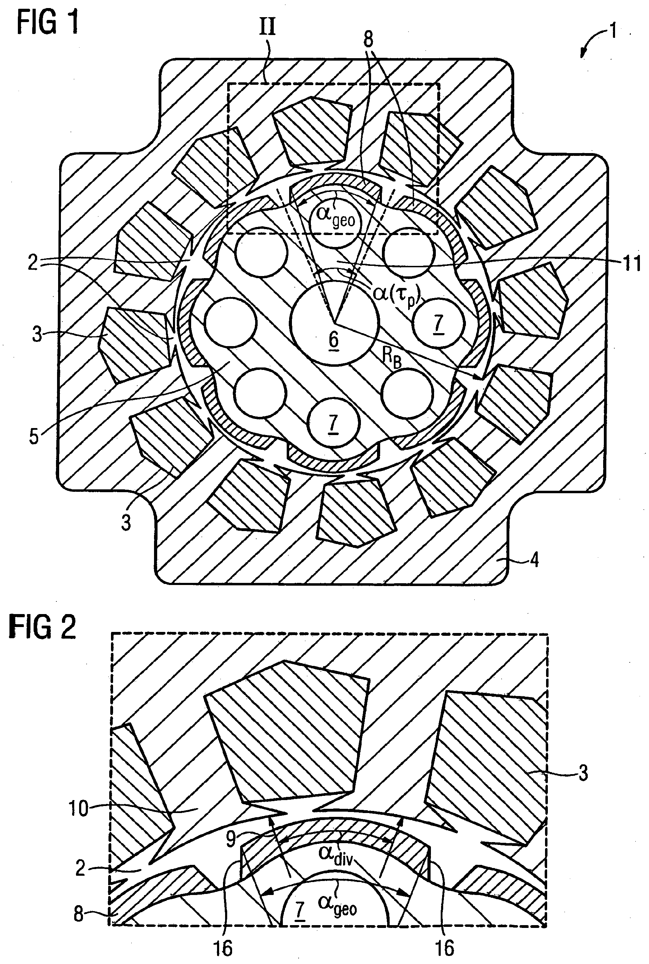

FIG 1 zeigt in einem Querschnitt eine prinzipiell dargestellte permanenterregte Synchronmaschine 1 mit ihrem Stator 4 und einen in der Statorbohrung angeordneten Rotor 5.

Ebenso lässt sich der erfindungsgemäße Gedanke auch auf Kombinationsantriebe übertragen, bei denen ein rotatorischer Elektromotor und ein zylindrischer Linearmotor gemeinsam eine Welle bzw. axial bewegen. Ein derartiger Kombinationsantrieb bei dem der erfindungsgemäße Gedanke einzusetzen wäre, ist beispielsweise in der DE 10 2004 056 212 A1 beschrieben.

Der Stator 4 weist in seinen Nuten 2 ein Wicklungssystem 3 auf, das sowohl als eine klassisch gesehnte Wicklung, als auch als eine Zahnspulenwicklung ausgeführt sein kann. Bei einer Zahnspulenwicklung umfasst jede Zahnspule einen Zahn des Stators 4. Die Zahnspule ist aus Runddrähten, Flachdrähten oder Litzendrähten aufgebaut. Jede Zahnspule weist außer ihrem elektrischen Anschluss zwei Spulenseiten auf, die in einen Zahn umgebenden Nuten positioniert sind und die beiden Spulenseiten verbindende Wickelkopfabschnitte. Die Zahnspulen sind entweder auf einen Spulenträger gewickelt oder sind mit Hilfe einer Schablone gewickelt von der sie dann vor der Montage abgezogen wurden. DE 199 61 339 A1 offenbart Zahnspulen.

Folgende Varianten sind dabei ausführbar:

In einer Nut 2 des Stators 4 befindet sich nur eine Spulenseite einer Zahnspule, damit weist nur jeder zweite Zahn eine ihn umfassende Zahnspule auf. In einer zweiten Variante befinden sich in einer Nut 2 zwei Spulenseiten unterschiedlicher Zahnspulen benachbarter Zähne. Damit ist jeder Zahn von einer Zahnspule umfasst.

Die Nuten 2 sind dabei als halbgeschlossene Nuten 2 ausgeführt. Prinzipiell kann der Stator 4 auch mit offenen Nuten 2 ausgeführt sein. Bei halbgeschlossenen Nuten 2 werden die Wicklungen vorteilhafterweise von der Statorbohrung aus eingeträufelt. Dieser Wicklungsvorgang kann vereinfacht werden, wenn die Nuten offen gestaltet sind, oder wenn bei nahezu geschlossenen Nuten 2 oder geringer Achshöhe der dynamoelektrischen Maschine, der Stator zweigeteilt aufgebaut wird, d.h. die Wicklung wird von außen auf bzw. um die Zähne positioniert, um dann dieses Paket axial in einen Jochrücken einzusetzen, um einen magnetischen Rückschluss zu erhalten. DE 196 52 795 A1 offenbart einen zweigeteilten Stator.

Bei offenen oder halbgeschlossenen Nuten 2 sind in einer weiteren Ausführung nicht näher dargestellte Nutverschlusskeile, mit vorgegebenen magnetischen Eigenschaften vorzusehen.

Der Rotor 5, der drehfest mit einer Welle 6 verbunden ist, weist an seiner Oberfläche, die insbesondere wellenförmig ausgeführt ist, Permanentmagnete 8 auf, die als Schalenmagnete ausgebildet sind. Diese Schalenmagnete weisen außer ihren Randbegrenzungsflächen im Wesentlichen zwei Oberflächen auf, die als äußere Oberfläche 14 und als innere Oberfläche 15 bezeichnet werden, wobei die innere Oberfläche 15 der wellenförmigen Ausgestaltung des Rotors 5 angepasst ist. Die äußere Oberfläche 14 weist hingegen zum Luftspalt der permanenterregten Synchronmaschine 1.

Der Rotor 5 selbst weist radial innerhalb der wellenförmigen Oberflächen axiale Öffnungen 7 auf, die zum einen zur Kühlung des Rotors 5, als auch zu einem trägheitsarmen Rotor 5 beitragen, um so die Dynamik des Antriebs weiter zu erhöhen.

Der Rotor 5 kann ebenso ohne wellenförmige Struktur ausgeführt sein, d.h. er ist im Querschnitt betrachtet rund ausgeführt. Es ist jedoch dann eine Positionierung und Fixierung der Schalenmagnete vorzusehen.

FIG 2 zeigt in einer Detailansicht die Ausgestaltung und insbesondere die magnetische Vorzugsrichtung 9 der Schalenmagnete. Diese Vorzugsrichtung ist insbesondere bezüglich der äußeren Oberfläche 14 der Schalenmagnete radial oder zumindest quasiradial gestaltet, so dass sich eine Unterdrückung der Drehmomentwelligkeit einstellt. Vorzugsweise beträgt der Winkel der Feldlinien $\alpha_{div} = 0, 3...0, 9\, \alpha_{geom}$.

Magnete mit gekrümmter Oberfläche sind normalerweise parallel magnetisiert, d.h. die Feldlinien verlaufen außerhalb des Permanentmagneten parallel, und sind nicht wie bei den erfindungsgemäßen Schalenmagneten mit einer radialen, insbesondere quasiradialen magnetischen Anisotropie versehen.

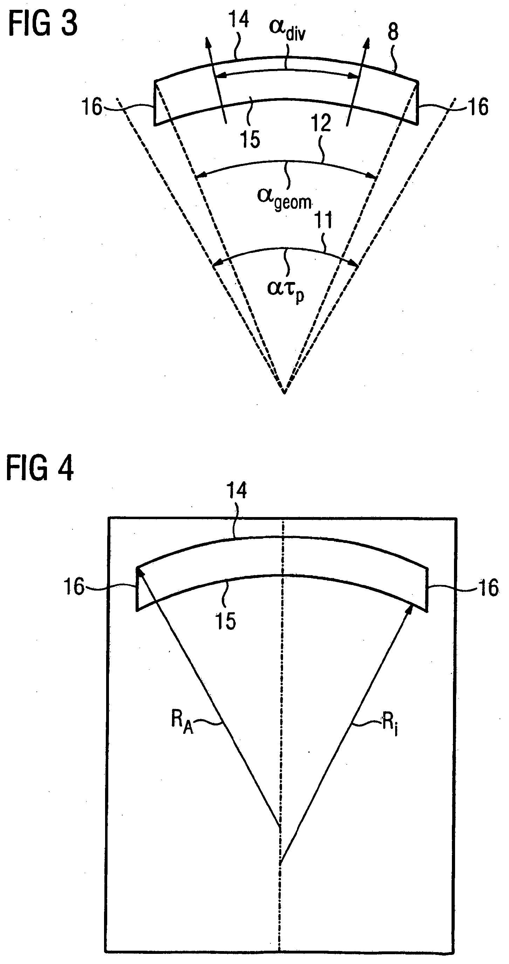

FIG 3 zeigt in schematischer Darstellung die Ausbildung eines magnetischen Pols 11 des Rotors 5, die eine Teilpolbedeckung 12 des Schalenmagneten ausgebildeten Permanentmagneten 8 vorsieht. Teilpolbedeckung

$$\frac{\alpha_{geom}}{\alpha\tau_p} \;\text{mit}\; \alpha\tau_\mathbf{p} = \frac{360°}{2p} \;;\; \text{wobei 2p die Anzahl der}$$

magnetischen Pole 11 ist.

Bei einer rotatorischen dynamoelektrischen Maschine ist der Rotor in Umfangsrichtung je nach Polanzahl in Winkelabschnitte $\alpha\tau_p$ unterteilt, die jeweils einem magnetischen Pol 11 entsprechen. Der magnetische Pol 11 weist somit bei einer rotatorischen dynamoelektrischen Maschine einen Winkel von $\alpha\tau_p$ auf. Die Teilpolbedeckung 12 ist aus dem vorgegebenen Bereich vom 0,9-fachen des magnetischen Pols $\alpha\tau_p$ bis zum 0,5-fachen des magnetischen Pols $\alpha\tau_p$ je nach angestrebten Reduktionsfaktoren der jeweiligen Oberwellen gewählt. Die Teilpolbedeckung $\alpha_{geom}$ der Schalenmagnete eines magnetischen Pols $\alpha\tau_p$ liegt somit zwischen $0,9\alpha\tau_p > \alpha_{geom} > 0,5\alpha\tau_p$. Damit wird eine weitere Reduzierung der Drehmomentwelligkeit erreicht.

Die Ausrichtung der Seitenflächen 16 der Schalenmagnete ist entweder radial oder dachförmig gemäß der Figuren ausgeführt, so dass sich der Schalenmagnet in Richtung Randbezirke des magnetischen Pols 11 erstreckt.

Als ausschlaggebender, magnetisch maßgebender Bereich, insbesondere Winkelbereich $\alpha_{geom}$ bei

einem rischen permanenterregten Synchronmotor für die Teilpolbedeckung sind, wie in der Fig. 3 dargestellt, die äußeren Kanten des jeweiligen Permanentmagnets 8 relevant. An den Seitenflächen 16 treten so gut wie keine Feldlinien des Permanentmagneten 8 aus, so dass sich auch bei einer dachförmigen Struktur der Seitenflächen 16 des Permanentmagnets 8, der Teilpolbedeckungsfaktor nicht ändert. Entscheidend für die Teilpolbedeckung 12 ist somit $\alpha_{geom}$, d.h. der Winkelbereich des als Schalenmagneten ausgeführten Permanentmagneten 8 aus dem die Feldlinien austreten. Dies ist also die Oberfläche 14 des Schalenmagneten ohne die Seitenflächen 16.

FIG 4 zeigt in einer Darstellung, die Ausgestaltung des Schalenmagneten, wobei der Außenradius $R_A$ des Schalenmagneten und der Innenradius $R_i$ des Schalenmagneten identisch sind. Damit ergibt sich eine in Richtung der Polkanten leicht abfallende Dicke des Schalenmagneten.

Damit reduziert sich bei einer Anordnung des Schalenmagneten innerhalb seines magnetischen Pols 11 in Richtung Polkanten die Dicke des Schalenmagneten, also deren radiale Ausdehnung. Aufgrund der erfindungsgemäßen Radienverhältnisse von Statorbohrung $R_B$ und Radius $R_A$ des Schalenmagneten $R_A < 0{,}6 R_B$, wird der Luftspalt der permanenterregten Synchronmaschine in Richtung Polkanten zusätzlich vergrößert.

Eine ausreichende Reduzierung der Drehmomentwelligkeit stellt sich bei Realisierung der Einzelmaßnahmen oder einer frei wählbaren Kombination dieser Einzelmaßnahmen ein. D.h. bei identischem Radius der Schalenmagnete $R_A$ und $R_I$, oder bei dem Verhältnis von $R_A$ zu $R_B$ kleiner 0,6, oder bei Verwendung von Schalenmagneten mit quasiradialer Anisotropie, vorzugsweise $\alpha_{div} = 0, 3...0, 9\, \alpha_{geom}$, oder mit einer vorgegebenen Teilpolbedeckung vom 0,9 bis 0,5 fachen, werden Drehmomentwelligkeit und die Verluste im Stator 4, wie beispielsweise Eisen- und Hystereseverluste, besonders bei hohen Drehzahlen größer 5000 U/min reduziert.

D.h. die Einzelmerkmale führen bereits zu einer Reduzierung der Pegel der Oberwellen, Teilkombinationen, aber insbesondere die Gesamtkombination der oben beschriebenen Merkmale schafft einen nahezu sinusförmigen Verlauf der magnetischen Flussdichte im Luftspalt.

Insbesondere die Kombination von Teilpolbedeckung mit identischem Radius der Schalenmagnete auf der inneren Oberfläche 15 und der äußeren, also zum Luftspalt der dynamoelektrischen Maschine gewandten Oberfläche 14 und dem Verhältnis des Außenradius $R_A$ zur Statorbohrung $R_B$ von kleiner 0,6 und insbesondere die radiale, bzw. quasiradiale magnetische Anisotropie also Vorzugsrichtung, vorzugsweise mit $\alpha_{div} = 0, 3...0, 9\, \alpha_{ge-om}$, bewirkt mit einer vorgebbaren Teilpolbedeckung im erfindungsgemäßen Zusammenspiel eine äußerst wirksame Reduzierung der Drehmomentwelligkeit.

Eine geringe Drehmomentwelligkeit wird durch ein sinusförmiges Luftspaltfeld im Luftspalt der permanenterregten Synchronmaschine erreicht. Dabei ist der Verlauf der Flussdichte im Luftspalt sinusförmig zu gestalten.

Bei bisher verwendeten Permanentmagneten mit paralleler Anisotropie, wie im Stand der Technik, verlaufen die Feldlinien des Permanentmagneten parallel und/oder der Radius von äußerer und innerer Oberfläche ist unterschiedlich, so dass sich zumindest im Bereich des Permanentmagneten ein konstanter Luftspalt einstellt. Damit weist die Flussdichte im Bereich des Permanentmagneten einen nahezu konstanten Verlauf auf. Die Steigung des Nulldurchgangs dieses Flussdichteverlaufs über die magnetischen Pole an den Polkanten ist relativ gering. Es stellt sich nahezu keine Streuung ein, weil sämtliche Feldlinien des Permanentmagneten ins Eisen des Stators übertreten.

Erfindungsgemäß wird aufgrund der radialen oder zumindest quasiradialen Anisotropie, wie oben ausgeführt, in Kauf genommen, dass sich die Streuung vergleichsweise vergrößert, da nicht mehr so viele Feldlinien ins Eisen des Stators übertreten. Der Flussdichteverlauf nähert sich somit einem sinusförmigen Verlauf.

Durch die radialen Abmessungen, d.h. $R_A$ kleiner 0,6 mal $R_B$ und $R_A$ gleich $R_I$ ggf. mit dem Merkmal eines zusätzlich aus dem erfindungsgemäßen Intervall vorgebbaren Teilpolbedeckungsfaktor, wird der Flussdichteverlauf nahezu sinusförmig, d.h. es liegt zwar eine vergleichsweise hohe Streuung vor, indem noch weniger Feldlinien des Permanentmagneten 8 das Eisen des Stators 4 im Bereich einer Polteilung durchsetzen, andererseits sind die parasitären Oberwellen nahezu kompensiert.

Damit sinkt zwar auch die abgegebene Leistung des Antriebs, aber die Drehmomentwelligkeit ist erheblich reduziert. Insbesondere bei hohen Drehzahlen sinken damit auch die Eisen- und Hystereseverluste im Stator 4.

Einsatzgebiet dieser dynamoelektrischen Maschinen sind insbesondere Werkzeugmaschinen, bei denen in besonderem Maße die Drehmomentwelligkeit zu vermeiden ist, um eine hohe Bearbeitungsgüte der bearbeiteten Werkstückoberflächen zu erhalten.

## Patentansprüche

1. Permanenterregte Synchronmaschine (1) mit einem mit Nuten (2) versehenen Stator (4) und mit einem Rotor (5), der Permanentmagnete (8) aufweist, die magnetische Pole (11) bilden, wobei die Permanentmagnete (8) als Schalenmagnete mit zwei gekrümmten Oberflächen (14,15) ausgeführt sind, die jeweils einen vorgebbaren Teil eines magnetischen Pols (11) bedecken, **dadurch gekennzeichnet, dass** der Innenradius ($R_i$) der Schalenmagnete gleich dem Außenradius ($R_A$) der Schalenmagnete ist.

2. Permanenterregte Synchronmaschine (1) nach Anspruch 1, **dadurch gekennzeichnet, dass** der Außenradius ($R_A$) der Schalenmagnete kleiner als das 0,6-fache des Radius ($R_B$) einer Statorbohrung ist.

3. Permanenterregte Synchronmaschine (1) nach einem der vorhergehenden Ansprüche, **dadurch gekennzeichnet, dass** die Schalenmagnete eine im wesentlichen senkrecht zu ihrer äußeren Oberfläche (14) gerichtete quasiradiale magnetische Vorzugsrichtung (9) aufweisen.

4. Permanenterregte Synchronmaschine (1) nach einem der vorhergehenden Ansprüche, **dadurch gekennzeichnet, dass** die Teilpolbedeckung der Schalenmagnete im Bereich ihres magnetischen Pols (11) im Bereich zwischien $0,9\alpha\tau_p > \alpha_{geom} > 0,5\alpha\tau_p$ liegt, mit $\alpha\tau_p$ als der magnetischen Polteilung des Rotors (5).

5. Permanenterregte Synchronmaschine (1) nach einem der vorhergehenden Ansprüche, **dadurch gekennzeichnet, dass** die quasiradiale Ausrichtung der magnetischen Vorzugsrichtung (9) gemäß $\alpha_{div} = 0,3...0,9\ \alpha_{geom}$ gewählt ist, mit

   $\alpha_{div}$ dem Winkel zwischen zwei Feldlinien des Permanentmagneten (8) und
   $\alpha_{geom}$ dem Winkel der Teilpolbedeckung des magnetischen Pols $\alpha\tau_p$

   .

6. Permanenterregte Synchronmaschine (1) nach Anspruch 4, **dadurch gekenntzeichnet,** dass die Schalenmagnete der magnetischen Pole (11) eines Rotors (5) die gleiche Teilpolbedeckung aufweisen.

7. Permanenterregte Synchronmaschine (1) nach einem der vorhergehenden Ansprüche, **dadurch gekennzeichnet, dass** die Schalenmagnete eines magnetischen Pols (11) axial hintereinander ohne Schrägung angeordnet sind und/oder innerhalb ihres magnetischen Pols (11) in Umfangsrichtung betrachtet aus Teilschalenmagneten aufgebaut sind.

8. Permanenterregte Synchronmaschine (1) nach einem der vorhergehenden Ansprüche 1 bis 5, **dadurch gekennzeichnet, dass** die magnetischen Pole (11) eines Rotors (5) jeweils nur einen Schalenmagneten aufweist.

9. Permanenterregte Synchronmaschine (1) nach einem der vorhergehenden Ansprüche, **dadurch gekennzeichnet, dass** die permanenterregte Synchronmaschine Teil eines Kombinationsantriebs ist, beidem ein rotatorischen Elektromotor und ein zylindrischer Linearmotor gemeinsam eine Welle antreiben bzw. axial bewegen.

10. Permanenterregte Synchronmaschine (1) nach einem der Ansprüche 1 bis 9, **dadurch gekennzeichnet, dass** der Stator zweiteilig ausgeführt ist, derat, dass ein Zahnpaket mit Wicklungen axial in einen Jochrücken eingesetzt ist.

11. Permanenterregte Synchronmaschine (1) nach einem der Ansprüche 1 bis 8, **dadurch gekennzeichnet, dass** der Stator Zahnspulen aufweist.

**Claims**

1. Permanent-magnet synchronous machine (1) having a stator (4) which is provided with slots (2) and having a rotor (5) which has permanent magnets (8) which form magnet poles (11), with the permanent magnets (8) being in the form of shell magnets with two curved surfaces (14, 15) which each cover a predeterminable part of a magnet pole (11), **characterized in that** the internal radius ($R_i$) of the shell magnets is equal to the external radius ($R_A$) of the shell magnets.

2. Permanent-magnet synchronous machine (1) according to Claim 1, **characterized in that** the external radius ($R_A$) of the shell magnets is less than 0.6 times the radius ($R_B$) of a stator bore.

3. Permanent-magnet synchronous machine (1) according to either of the preceding claims, **characterized in that** the shell magnets have a quasi-radial magnetic preferred direction (9) which is directed essentially at right angles to its outer surface (14).

4. Permanent-magnet synchronous machine (1) according to one of the preceding claims, **characterized in that** the partial pole coverage of the shell magnets in the area of the magnetic pole (11) is in the range between $0.9\alpha\tau_p > \alpha_{geom} > 0.5\alpha\tau_p$, where $\alpha\tau_p$ is the magnetic pole pitch of the rotor (5).

5. Permanent-magnet synchronous machine (1) according to one of the preceding claims, **characterized in that** the quasi-radial alignment of the magnetic preferred direction (9) is chosen using $\alpha_{div} = 0.3...0.9\ \alpha_{geom}$ where

   $\alpha_{div}$ is the angle between two field lines of the permanent magnet (8), and
   $\alpha_{geom}$ is the angle of the partial pole coverage of the magnetic pole $\alpha\tau_p$.

6. Permanent-magnet synchronous machine (1) according to Claim 4, **characterized in that** the shell magnets of the magnetic poles (11) of a rotor (5) have the same partial pole coverage.

7. Permanent-magnet synchronous machine (1) according to one of the preceding claims, **characterized in that** the shell magnets of a magnetic pole (11) are arranged axially one behind the other without any inclination, and/or are formed from partial shell magnets within the magnetic pole (11), seen in the circumferential direction.

8. Permanent-magnet synchronous machine (1) according to one of the preceding Claims 1 to 5, **characterized in that** the magnetic poles (11) of a rotor (5) each have only one shell magnet.

9. Permanent-magnet synchronous machine (1) according to one of the preceding claims, **characterized in that** the permanent-magnet synchronous machine is part of a combination drive in which a rotating electric motor and a cylindrical linear motor jointly drive a shaft and move axially.

10. Permanent-magnet synchronous machine (1) according to one of Claims 1 to 9, **characterized in that** the stator is of two-part design, in such a way that a tooth pack with windings is inserted axially into a yoke rear.

11. Permanent-magnet synchronous machine (1) according to one of Claims 1 to 8, **characterized in that** the stator has tooth-wound coils.

**Revendications**

1. Machine ( 1 ) synchrone à excitation permanente, comprenant un stator ( 4 ) pourvu d'encoches ( 2 ) et un rotor ( 5 ) qui a des aimants ( 8 ) permanents formant des pôles ( 11 ) magnétiques, les aimants ( 8 ) permanents étant réalisés sous la forme d'aimants à coque ayant deux surfaces ( 14, 15 ) incurvées, qui recouvrent respectivement une partie pouvant être donnée à l'avance d'un pôle ( 11 ) magnétique, **caractérisée en ce que** le rayon ( $R_i$ ) intérieur des aimants à coque est égal au rayon ( $R_A$ ) extérieur des aimants à coque.

2. Machine ( 1 ) synchrone à excitation permanente suivant la revendication 1, **caractérisée en ce que** le rayon ( $R_A$ ) extérieur des aimants à coque est plus petit que 0,6 fois le rayon ( $R_B$ ) de l'alésage du stator.

3. Machine ( 1 ) synchrone à excitation permanente suivant l'une des revendications précédentes, **caractérisée en ce que** les aimants à coque ont un sens ( 9 ) d'aimantation préférentiel quasi radial, dirigé sensiblement perpendiculairement à leur surfa-

ce ( 14 ) extérieure.

**en ce que** le stator a des bobines à dents.

4. Machine ( 1 ) synchrone à excitation permanente suivant l'une des revendications précédentes, **caractérisée en ce que** le recouvrement polaire partiel des aimants à coque, dans la partie de leur pôle ( 11 ) magnétique, est compris entre 0,9 $\alpha\tau_p$ > $\alpha_{geom}$ >0, 5 $\alpha\tau_p$, $\alpha\tau_p$ étant le pas polaire magnétique du rotor ( 5 ).

5. Machine ( 1 ) synchrone à excitation permanente suivant l'une des revendications précédentes, **caractérisée en ce que** l'orientation quasi radiale du sens ( 9 ) d'aimantation préférentiel est choisie suivant $\alpha_{div}$ = 0, 3...0, $\alpha_{geom}$ avec

$\alpha_{div}$ angle entre les lignes de force des aimants ( 8 ) permanents et
$\alpha_{geom}$ angle du recouvrement polaire partiel du pôle $\alpha$...p magnétique.

6. Machine ( 1 ) synchrone à excitation permanente suivant la revendication 4, **caractérisée en ce que** les aimants à coque des pôles ( 11 ) magnétiques d'un rotor ( 5 ) ont le même recouvrement polaire partiel.

7. Machine ( 1 ) synchrone à excitation permanente suivant l'une des revendications précédentes, **caractérisée en ce que** les aimants à coque d'un pôle ( 11 ) magnétique sont disposés axialement les uns derrière les autres sans inclinaison et/ou, considérés dans la direction périphérique à l'intérieur de leur pôle ( 11 ) magnétique, sont formés d'aimants à coque partiels.

8. Machine ( 1 ) synchrone à excitation permanente suivant l'une des revendications précédentes 1 à 5, **caractérisée en ce que** le pôle ( 11 ) magnétique d'un rotor ( 5 ) n'a respectivement qu'un aimant à coque.

9. Machine ( 1 ) synchrone à excitation permanente suivant l'une des revendications précédentes, **caractérisée en ce que** c'est la partie de machine synchrone à excitation permanente d'un entraînement en combinaison, dans lequel un moteur électrique tournant et un moteur linéaire cylindrique entraînent ensemble un arbre ou le déplacent axialement.

10. Machine ( 1 ) synchrone à excitation permanente suivant l'une des revendications 1 à 9, **caractérisée en ce que** le stator est réalisé en deux parties de manière à insérer un paquet de dents ayant des roulements axialement dans un dos de culasse.

11. Machine ( 1 ) synchrone à excitation permanente suivant l'une des revendications 1 à 8, **caractérisée**

# FIG 1

# FIG 2

FIG 3

$\alpha_{div}$

$\alpha_{geom}$

$\alpha\tau_p$

FIG 4

$R_A$

$R_i$

**IN DER BESCHREIBUNG AUFGEFÜHRTE DOKUMENTE**

**In der Beschreibung aufgeführte Patentdokumente**

- DE 10041329 A1
- DE 19961760 A1
- DE 102004045939 A1
- JP 2003230240 A
- EP 0445308 A1
- DE 102004056212 A1
- DE 19961339 A1
- DE 19652795 A1